# EUROPEAN PATENT SPECIFICATION

(11) **EP 3 838 804 B1**
(45) Date of publication and mention of the grant of the patent: **28.10.2026**
(21) Application number: 19862924.8
(22) Date of filing: 02.08.2019
(51) Int. Cl.: B65G 1/04, B65G 1/137, G06Q 10/08

(54) **DELIVERY SITE AND DELIVERY METHOD**
FREISETZUNGSORT UND FREISETZUNGSVERFAHREN
LIEU DE LIVRAISON ET PROCÉDÉ DE LIVRAISON

(30) Priority: 21.09.2018 CN 201811106165
(43) Date of publication of application: 23.06.2021
(60) Divisional application: 22198707.6 / 4 134 336
(73) Proprietor: Beijing Jingdong Qianshi Technology Co., Ltd., Beijing 100176 (CN)
(72) Inventor: CHEN, Ying, Beijing 100086 (CN); XIAO, Jun, Beijing 100086 (CN); ZHANG, Yafang, Beijing 100086 (CN); WANG, Zhao, Beijing 100086 (CN); ZHANG, Jian, Beijing 100086 (CN); ZHANG, Qiang, Beijing 100086 (CN)
(74) Representative: Page White Farrer
(86) International application number: PCT/CN2019/099072
(87) International publication number: WO 2020/057271

(56) References cited:
- WO-A1-2015/061008
- WO-A1-2018/094019
- WO-A1-2019/106138
- CN-A- 105 787 536
- CN-A- 106 347 913
- CN-A- 106 570 667
- CN-A- 106 886 876
- CN-A- 107 600 861
- JP-A- S6 317 703
- US-A1- 2014 032 034
- US-A1- 2016 104 099

## Description

### TECHNICAL FIELD

The present disclosure relates to the field of logistics, and in particular to a distribution site and a distribution method.

### BACKGROUND

During the distribution and automated storage of goods, logistics is a process of realizing the demands of users by an organic combination of basic functions such as transport, storage, loading and unloading, conveying, distribution, and information processing according to actual requirements during the physical flow of goods from a supplying place to a receiving place. Logistics plays a very important role in modern business.

In the field of logistics, warehouse transfer and goods extracting are very important links. The costs of these links account for a large proportion of the entire logistics cost, so that it is always a direction of research and development within the industry to make technical optimizations to such links. The distribution sites in the related art are generally a plurality of network sites established in cities, and each network site is deployed with relevant staff so that labor is used for transferring goods or helping clients to extract goods.

WO 2018/094019 A1 discloses a system comprising a docking station remotely located from a fulfillment center, a fulfillment system, an unmanned aerial vehicle, and an autonomous ground vehicle.

WO 2019/106138 A1 (a document cited under A. 54(3) EPC) discloses a storage system adapted to store a plurality of items and to load a delivery robot with an item.

US 2016/104099 A1 discloses a system and method for an automated delivery system which includes a laser scanning mechanism.

WO 2015/061008 A1 discloses a distribution site with an automatic vending machine and an unmanned aerial vehicle configured to autonomously deliver items of inventory to various destinations.

JP-S 63-17703 discloses a distribution site according to the preamble of claim 1.

### SUMMARY

In one aspect, the present invention provides a distribution site according to claim 1. The distribution site comprises: a building having a storage space configured to store goods and a distribution interface area configured to park an unmanned ground distribution vehicle that is capable of performing goods distribution; a goods sorting device arranged in the building and configured to load the goods in the storage space onto the unmanned ground distribution vehicle; a vehicle adjusting mechanism arranged in the distribution interface area and configured to adjust a position of the unmanned ground distribution vehicle entering the distribution interface area, so that the goods sorting device performs loading; wherein the distribution site further comprises: a visual device arranged in the building and configured to recognize a position of the unmanned ground distribution vehicle entering the distribution interface area, so that the vehicle adjusting mechanism adjusts a position of the unmanned ground distribution vehicle according to a recognition result of the visual device; and an automatic vending device having an operation interface and a product exporting port, and arranged outside the building, wherein the goods sorting device is further configured to sort corresponding goods in the storage space as products to the product exporting port according to a purchase instruction inputted by the client in the operation interface.

In some embodiments, the distribution interface area is located in the building that is provided with a passage/door communicating the external with the distribution interface area.

In some embodiments, the vehicle adjusting mechanism includes: a rotary platform configured to rotate about an axis perpendicular to a horizontal plane, so as to adjust an angle of the unmanned ground distribution vehicle above the rotary platform relative to the goods sorting device by rotation.

In some embodiments, the goods sorting device includes: a track arranged in the building and located between the storage space and the distribution interface area; and a stacking robot running movably along the track, and configured to load the goods in the storage space onto the unmanned ground distribution vehicle.

In some embodiments, the stacking robot includes: a bracket running movably along the track; a rotary seat which is arranged on the bracket, rotatable in a horizontal direction relative to the bracket, and movable linearly in a vertical direction; and an end picker arranged on the rotary seat and configured to pick up or release the goods.

In some embodiments, the rail includes: a first rail arranged on a top ceiling inside the building; and a second rail arranged on a floor inside the building, and parallel to and directly opposite to the first rail.

In some embodiments, the bracket includes: a first sliding block forming a sliding pair with the first rail; a second sliding block forming a sliding pair with the second rail; and a support rod arranged upright between the first sliding block and the second sliding block, and having both ends respectively connected with the first sliding block and the second sliding block.

In some embodiments, there further includes: a goods replenishing device at least partially arranged in the building for receiving goods replenished from the outside.

In some embodiments, the goods replenishing device includes: a goods replenishing door openably and closably arranged on an external wall of the building; a rotary container having a plurality of storage grids for storing replenished goods, and rotatably arranged in the building; wherein the rotary container is located between the goods replenishing door and the storage space, such that by rotating the rotary container the storage grids that has been replenished with the goods from one side where the goods replenishing door is located are transferred to one side where the storage space is located, and empty storage grids of the rotary container are transferred to one side where the goods replenishing door is located.

In some embodiments, a rotation axis of the rotary container is perpendicular to a floor inside the building, and the goods replenishing door is configured to expose at least one vertical row of storage grids of the rotary container.

In some embodiments, respective storage grids in the rotary container are divided into a plurality of storage areas classified according to different types of goods.

In some embodiments, there further includes a goods replenishing device at least partially arranged in the building and configured to receive goods replenished from the external, wherein the track is also located between the storage space and the goods replenishing device, and the stacking robot is further configured to sort the goods received by the goods replenishing device to a corresponding position in the storage space.

In some embodiments, the storage space includes a plurality of goods grids for storing goods, which are distributed on at least one side of an interior of the building.

In some embodiments, a wall of the building is enclosed in a rectangle or a rounded rectangle, and the distribution interface area and the goods replenishing device are respectively arranged at both ends of the building along a length direction of the building, the storage space is arranged at at least one end of the building in a width direction of the building, and the goods sorting device runs among the distribution interface area, the goods replenishing device and the storage space.

In some embodiments, there further includes: a client self-picking mechanism having an operation interface and a goods self-picking port, and arranged outside the building, wherein the goods sorting device is further configured to sort corresponding goods in the storage space to the goods self-picking port according to a picking instruction inputted by the client in the operation interface.

In some embodiments, there further includes: a client dispatching mechanism having an operation interface and a goods placing port, and arranged outside the building, wherein the goods sorting device is further configured to sort the goods received by the goods placing port to corresponding positions in the storage space according to a dispatching instruction inputted by the client in the operation interface.

In some embodiments, an information display area is provided on an external wall of the building.

In some embodiments, an access door for entry and exit of staff is provided on an external wall of the building.

In another aspect of the present invention, a distribution method according to claim 13 is provided. The method is based on the distribution site of the invention, and comprises: loading the goods in the storage space corresponding to a distribution task onto the unmanned ground distribution vehicle through the goods sorting device when the unmanned ground distribution vehicle enters the distribution interface area, so that the unmanned ground distribution vehicle distributes the goods to a target position according to the distribution task.

In some embodiments, the distribution site further includes a goods replenishing device, and the distribution method further comprises: receiving the goods replenished from the external through the goods replenishing device; and sorting the goods received by the goods replenishing device to a corresponding position of the storage space by the goods sorting device.

### BRIEF DESCRIPTION OF THE DRAWINGS

The accompanying drawings, which constitute part of this specification, illustrate exemplary embodiments of the present disclosure, and together with this specification, serve to explain the principles of the present disclosure.

The present disclosure may be more clearly understood from the following detailed description with reference to the accompanying drawings, in which:
Fig. 1 is a schematic view of an external structure in some embodiments of the distribution site;
Fig. 2 is a schematic view of an internal structure in some embodiments of the distribution site;
Figs. 3-5 are schematic views of an external structure in some embodiments of the distribution site from different perspectives respectively;
Figs. 6-7 are schematic views of a process of adjusting a position of an unmanned ground distribution vehicle in some embodiments of the distribution site respectively;
Fig. 8 is a schematic structural view of an access door in some embodiments of the distribution site;
Figs. 9-10 are schematic views of a process of loading an unmanned ground distribution vehicle by a goods sorting device in some embodiments of the distribution site according to the present disclosure respectively; and
Fig. 11 is a schematic structural view of a goods sorting device in some embodiments of the distribution site.

It should be understood that the dimensions of the various parts shown in the accompanying drawings are not drawn according to the actual scale. In addition, the same or similar reference signs are used to denote the same or similar components.

### DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noticed that: relative arrangement of components and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity or importance, but are merely used to distinguish between different parts. A word such as "comprise", "include" or variants thereof means that the element before the word covers the element(s) listed after the word without excluding the possibility of also covering other elements. The terms "up", "down", "left", "right", or the like are used only to represent a relative positional relationship, and the relative positional relationship may be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

The distribution sites in the related art are generally a plurality of network sites established in cities, and each network site is deployed with relevant staff so that labor is responsible for transferring goods or helping clients to pick up goods. After research by the inventors, it has been found that although there is an application mode of using a drone or a unmanned ground vehicle for goods distribution in related technologies, such application method still depends on manual participation, which results in high cost and low efficiency. Moreover, whether the distribution of goods is successful or not is restricted by the quality of the operators to a certain extent.

In view of this, embodiments provide a distribution site and a distribution method, which can reduce dependence on labor.

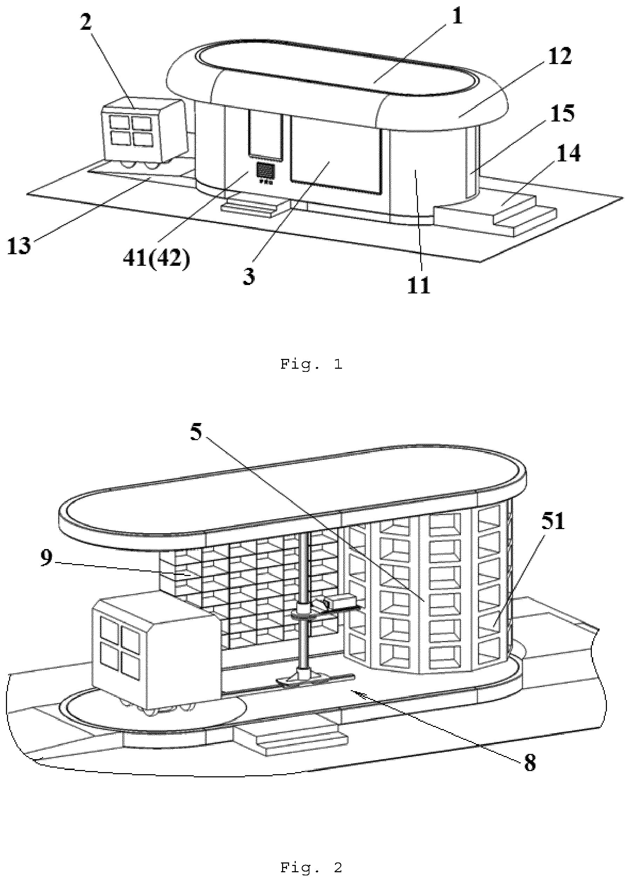

As shown in Fig. 1, it is a schematic view of an external structure in some embodiments of the distribution site. Referring to Fig. 1 in conjunction with Figs. 2 to 11, the distribution site includes: a building 1 and a goods sorting device 8. The building 1 has a storage space 9 for storing goods and a distribution interface area for parking an unmanned ground distribution vehicle 2 that can perform goods distribution. The building 1 may be a stationary building structure that is fixedly constructed on the ground, a movable traveling building structure, or a combined structure of a stationary building structure and a traveling building structure.

The goods sorting device 8 is arranged in the building 1 and may load the goods in the storage space 9 onto the unmanned ground distribution vehicle 2 when the unmanned ground distribution vehicle 2 is parked in the distribution interface area. The unmanned ground distribution vehicle 2 here may include an unmanned driving vehicle or a remotely controlled truck. In this embodiment, the storage space and the distribution interface area are arranged in the building of the distribution site, and the goods in the storage space are loaded onto the unmanned ground distribution vehicle that is parked at the distribution interface area through the goods sorting device, thereby lowering the dependence on labor during transportation of the goods from the distribution site to the external and loading and unloading of the goods in the distribution site, improving the distribution efficiency and reducing the labor cost.

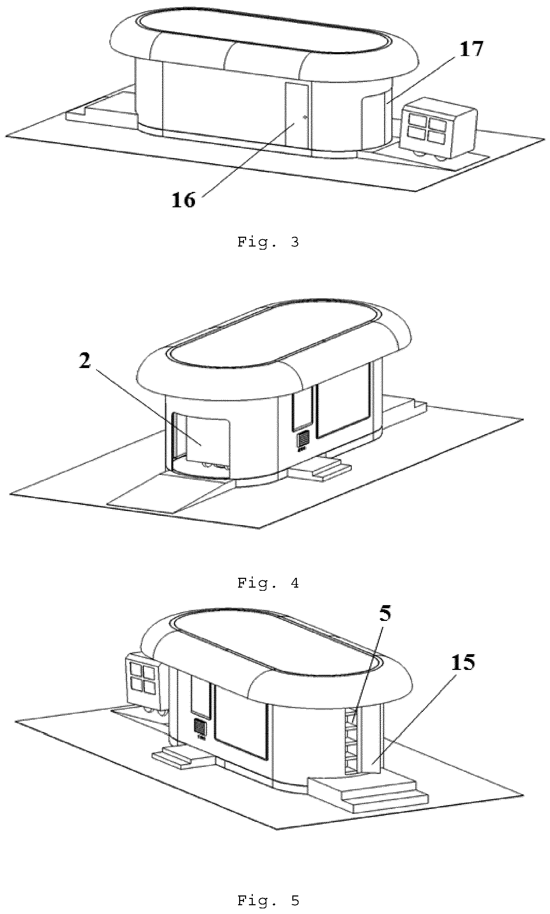

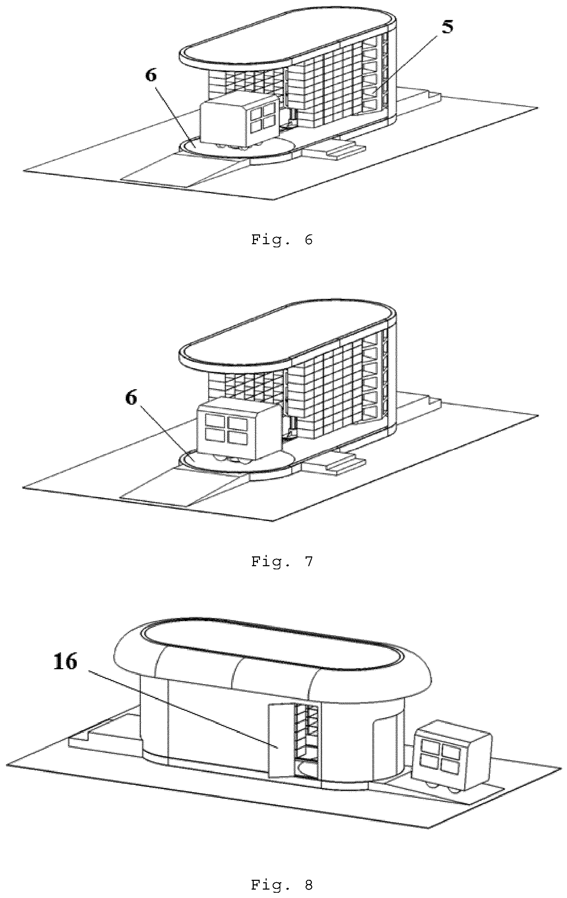

The distribution interface area may be located in the building 1, which is provided with a passage/door 17 communicating the external with the distribution interface area (see Fig. 3). The door 17 may be automatically opened when the unmanned ground distribution vehicle 2 enters into or exits from the distribution site, and closed at other times. Referring to Figs. 6 and 7, the distribution site includes a vehicle adjusting mechanism 6. The vehicle adjusting mechanism 6 is arranged in the distribution interface area and configured to adjust a position of the unmanned ground distribution vehicle 2 entering the distribution interface area. The vehicle adjusting mechanism 6 may include a rotary platform provided on the floor of the distribution interface area. After the unmanned ground distribution vehicle 2 moves onto the rotary platform, the rotary platform may rotate about an axis perpendicular to the horizontal plane, so that the angle of the unmanned ground distribution vehicle 2 above the rotary platform relative to the goods sorting device 8 may be adjusted by rotation so as to facilitate loading the goods.

In order to allow a smoother loading process of the unmanned ground distribution vehicle 2, a visual device is provided inside the building 1. The visual device is configured to recognize a position of the unmanned ground distribution vehicle 2 entering the distribution interface area, so that the vehicle adjusting mechanism 6 adjusts a position of the unmanned ground distribution vehicle 2 according to a recognition result of the visual device. In this way, it is not only possible to facilitate the vehicle adjusting mechanism 6 to accurately adjust the unmanned ground distribution vehicle 2, but also to allow the goods sorting device 8 to load the goods onto the unmanned ground distribution vehicle 2 more accurately.

Referring to Figs. 1 to 4 and Fig. 6 to Fig. 7, the unmanned ground distribution vehicle 2 when assigned to the distribution site according to a distribution instruction, may move along a slope 13 on one side of the distribution site to the outside of the door 17 of the building 1. When the door 17 is opened, the unmanned ground distribution vehicle 2 may travel into the interior of the distribution site and be parked above the vehicle adjusting mechanism 6 in the distribution interface area. Referring to Fig. 6, if a direction of movement of the wheels of the unmanned ground distribution vehicle 2 is different from an orientation of the goods entrance 21 provided on the unmanned ground distribution vehicle 2, it is necessary to rotate the unmanned ground distribution vehicle 2 to a specific angle by the vehicle adjusting mechanism 6 so that the goods entrance 31 faces towards an interior of the building 1, thereby facilitating the goods sorting device 8 to load the goods to the goods entrance 31.

When good loading is completed, the vehicle adjusting mechanism 6 may rotate the unmanned ground distribution vehicle 2 to a direction that facilitates the wheels to exit from the distribution site. In addition, for an unmanned ground distribution vehicle 2 having a plurality of sides for carrying goods, different sides required to be loaded with goods may also be rotated by the vehicle adjusting mechanism 6 to corresponding directions in sequence, thereby allowing a more convenient and automated loading process.

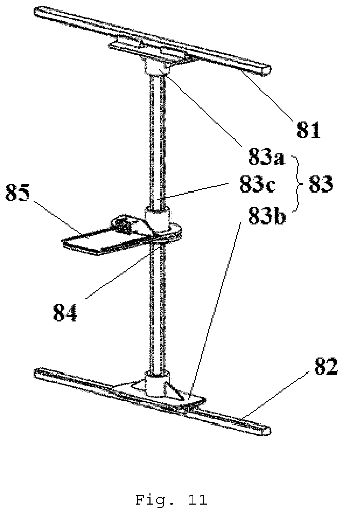

Referring to Figs. 2 and 11, in some embodiments, the goods sorting device 8 includes: a track and a stacking robot. The track is arranged in the building 1 and located between the storage space 9 and the distribution interface area. For example, the track may be arranged on a floor or side wall in the building as required, or on a top ceiling or an internal facility of the building as required. The stacking robot runs movably along the track, and configured to load the goods in the storage space 9 onto the unmanned ground distribution vehicle 2.

In some embodiments, the stacking robot may include: a bracket 83, a rotary seat 84, and an end picker 85. In this structure, the bracket 83 runs movably along the track. For example, the track in Fig. 11 may include: a first track 81 and a second track 82. The first rail 81 is arranged on the top ceiling inside the building 1. The second rail 82 is arranged on the floor inside the building 1, and is parallel to and directly opposite to the first rail 81. Correspondingly, the bracket 83 may include: a first sliding block 83a, a second sliding block 83b, and a support rod 83c. The first sliding block 83a and the first rail 81 form a sliding pair. The second sliding block 83b and the second rail 82 form a sliding pair. The support rod 83c may be arranged upright between the first sliding block 83a and the second sliding block 83b, and has both ends respectively connected with the first sliding block 83a and the second sliding block 83b. Such matching structure between the bracket and the track is relatively stable, and the operation is relatively smooth.

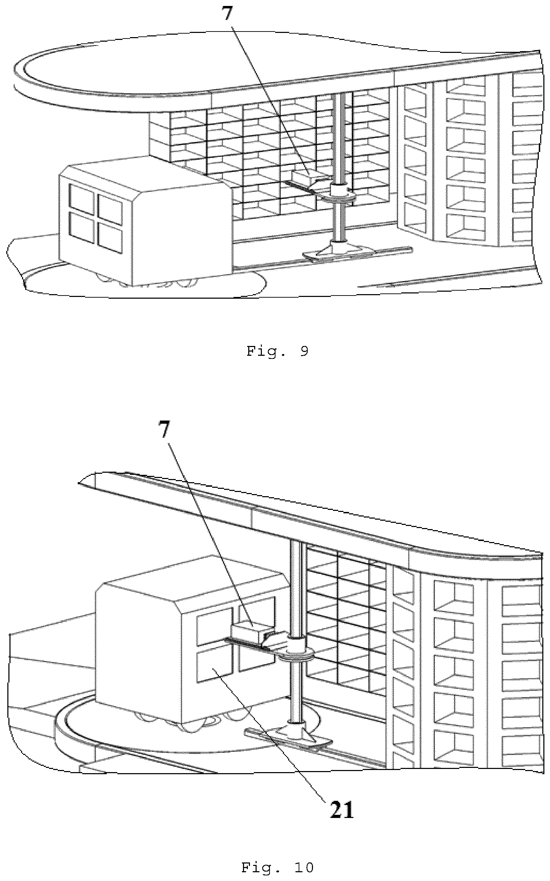

The rotary seat 84 which is arranged on the bracket 83 and rotatable in a horizontal direction relative to the bracket, may move linearly in a vertical direction. The end picker 85 is arranged on the rotary seat 84 and configured to pick up or release the goods. Referring to Figs. 9 and 10, when there is a need to load the goods, the support rod 83c of the goods sorting device may move to a corresponding position of a designated goods grid in the storage space according to an instruction. The rotary seat 84 may turn to a direction facing the goods grid, and ascend or descend along the support rod 83c to a height of the goods grid. Then, the goods are picked up from the goods grid by the end picker 85.

After the end picker 85 take outs the goods, the support rod 83c then moves to one side where the unmanned ground distribution vehicle 2 is located. The rotary seat 84 turns to face the unmanned ground distribution vehicle 2, and at the same time ascends or descends to a corresponding height of the designated goods entrance 21 of the unmanned ground distribution vehicle 2, and then releases the goods into the goods entrance 21 through the end picker 85, thereby completing the loading process.

The goods in the distribution site may be replenished in various ways. For example, the goods may be manually replenished into the distribution site from the external, or the goods may be replenished through a drone, an unmanned ground vehicle, or a remote transmission mechanism such as a belt conveyor system. In some embodiments, the distribution site may also include a goods replenishing device. The goods replenishing device may be at least partially arranged in the building 1 for receiving goods replenished from the external.

Referring to Fig. 2, in some embodiments, the storage space 9 in the building 1 may include a plurality of goods grids for storing goods. These goods grids may be distributed on at least one side inside the building 1. The wall of the building 1 may be enclosed in a rectangle or a rounded rectangle, and the distribution interface area and the goods replenishing device may be respectively arranged at both ends of the building 1 along a length direction of the building 1, and the storage space 9 is arranged at at least one end of the building 1 in a width direction of the building 1. The goods sorting device 8 runs among the distribution interface area, the goods replenishing device and the storage space 9.

Referring to Figs. 1 and 5, in some embodiments, in order to increase the capacity of the goods and avoid occupying much space in the distribution site, the goods replenishing device may include: a goods replenishing door 15 and a rotary container 5. The goods replenishing door 15 may be openably and closably arranged on an external wall of the building 1. Stairs 14 may also be provided on one side of the goods replenishing door 15 to facilitate walking by the staff.

The rotary container 5 has a plurality of storage grids 51 for storing replenished goods, and is rotatably arranged in the building 1. The rotary container 5 is located between the goods replenishing door 15 and the storage space 9. By rotating the rotary container 5, the storage grids 51 that has been replenished with the goods from one side where the goods replenishing door 15 is located are transferred to one side where the storage space is located, and the empty storage grids 51 of the rotary container 5 are transferred to one side where the goods replenishing door 15 is located. By means of such rotary structure, it is possible to effectively reduce the occupied space and increase the capacity of the goods.

During the replenishment process, the staff does not need to enter into an interior of the distribution site, but only needs to open the goods replenishing door 15 and place the goods in the storage grids 51 exposed on the rotary container 5. The storage grids 51 where the goods have been placed may turn to one side in the building 1 adjacent to the storage space 9 as the rotary container 5 rotates. At this time, the goods sorting device 8 may be used to sort the goods into the storage space 9. Referring to Fig. 2, the track may also be located between the storage space 9 and the goods replenishing device. The stacking robot is further configured to sort the goods received by the goods replenishing device to a corresponding position in the storage space 9.

In order to prevent the goods from falling when the rotary container 5 rotates, the rotation axis of the rotary container 5 is preferably perpendicular to the floor inside the building 1. Correspondingly, the goods replenishing door 15 may be configured to expose at least one vertical row of storage grids 51 of the rotary container 5. After placing goods in at least one vertical row of exposed storage grids 51 from the external of the goods replenishing door 15, the staff may await the rotary container 5 to rotate until the other rows of empty storage grids 51 are exposed before continuing the placement. At the same time, the goods sorting device inside the distribution site may performs a sorting operation on the goods in the storage grids 51 that has turned to the inside at the same time, thereby greatly improving the replenishing efficiency.

In other embodiments, respective storage grids 51 in the rotary container 5 may also be divided into a plurality of storage areas classified according to different types of goods. In this way, the operator may place the same type of goods in a corresponding storage area, so as to facilitate the goods sorting device to sort the goods.

In addition to being delivered to a target position or a target client through the distribution vehicle 3, the goods stored in the distribution site may also be picked up by the client, that is, the client directly obtains goods from the distribution site. Referring to Fig. 1, in some embodiments, the distribution site may further include: a client self-picking mechanism 41. The client self-picking mechanism 41 which has an operation interface and a goods self-picking port is arranged outside the building 1. The client may head for a designated distribution site according to a notification received in SMS, WeChat or other forms, and input a picking instruction into the operation interface according to the notification. The goods sorting device 8 may sort a corresponding goods in the storage space 9 to the self-picking port according to the picking instruction inputted by the client in the operation interface. Compared with the existing goods self-picking cabinet, only a single or a small number of goods self-picking ports are required to realize the self-picking function of a plurality of goods stored in the distribution site, thereby saving an area occupied by the client self-picking mechanism 41 on an external wall of the building and thus improving the space utilization of the external wall.

In addition to self-picking the goods, the client may also purchase products through the distribution site. Referring to Fig. 1, the distribution site further includes: an automatic vending device 42. The automatic vending device 42 which has an operation interface and a product exporting port is arranged outside the building 1. When the client inputs a purchase instruction for a specific product in the operation interface, the goods sorting device 8 sorts corresponding goods in the storage space 9 as products to the product exporting port according to the purchase instruction inputted by the client in the operation interface.

In addition, the client may also place a delivery order through the distribution site. In some embodiments, the distribution site may also include a client dispatching mechanism having an operation interface and a goods placing port and arranged outside the building 1. When the client inputs a dispatching instruction for goods brought by the client in the operation interface, the goods sorting device 8 may sort the goods received by the goods placing port to a corresponding position in the storage space 9 according to the dispatching instruction inputted by the client in the operation interface. In this way, the goods may be loaded onto the unmanned ground distribution vehicle 2 by the goods sorting device and transported to a preset target position.

In order to make full use of an external space of the distribution site, an information display area 3 may also be provided on an external wall of the building 1, for displaying static or dynamic advertisements, notices, programs, and the like, so as to more effectively utilize an external space of the building 1. In addition, referring to Fig. 8, an access door 16 for entry and exit of staff may also be provided on an external wall of the building 1 so that maintenance staff may enter the building 1 in time for device maintenance or troubleshooting.

Based on the embodiments of the above-described distribution site of the present invention, the present invention also provides a corresponding distribution method, as defined in claim 13. The distribution method comprises: loading the goods in the storage space 9 corresponding to a distribution task onto the unmanned ground distribution vehicle 2 through the goods sorting device 8 when the unmanned ground distribution vehicle 2 enters the distribution interface area, so that the unmanned ground distribution vehicle 2 distributes the goods to a target position according to the distribution task.

Referring to Fig. 1, the unmanned ground distribution vehicle 2 may head for a designated distribution site according to a dispatching instruction of the system. The system may also communicate with the distribution site to obtain a storage condition of the distribution site, so as to arrange the unmanned ground distribution vehicle 2 to distribute the goods in time. When the unmanned ground distribution vehicle 2 heads for the distribution site, it is also possible to communicate with the distribution site so as to confirm whether the distribution site currently possess a parking condition. When there is another unmanned ground distribution vehicle in the distribution site, it is possible to await its leaving before entering the distribution site.

When the unmanned ground distribution vehicle 2 has arrived at the distribution site, the unmanned ground distribution vehicle 2 may communicate with the distribution site so that the distribution site opens the passage/door 17, which allows the unmanned ground distribution vehicle 2 to enter a distribution interface area inside the building 1. The distribution site may also automatically detect or authenticate an incoming unmanned ground distribution vehicle 2 to determine whether it is qualified for access, and open the passage/door 17 after qualification.

After the unmanned ground distribution vehicle 2 is parked in the distribution interface area, the passage/door 17 may be closed in time to prevent access of unauthorized personnel at this occasion. The distribution site includes a visual device, and the visual device recognizes a position of the unmanned ground distribution vehicle 2 entering the distribution interface area. Based on the position information obtained by recognition, the vehicle adjusting mechanism 6 adjusts a position of the unmanned ground distribution vehicle 2, so that the goods entrance where the goods are loaded is at a convenient position for loading. If the unmanned ground distribution vehicle 2 has a plurality of loading sides, the vehicle adjusting mechanism 6 may adjust a position of the unmanned ground distribution vehicle 2 for multiple times.

The goods sorting device 8 may be a stacking robot, or other automatic devices such as a six-axis robot. The stacking robot may pick up the goods from the storage space and load the goods directly onto the unmanned ground distribution vehicle 2. After the loading of the unmanned ground distribution vehicle 2 is completed, the vehicle adjusting mechanism 6 may adjust a position of the unmanned ground distribution vehicle 2, so that the unmanned ground distribution vehicle 2 is in a position convenient for exiting from the distribution site. After the unmanned ground distribution vehicle 2 exits, the passage/door 17 may be closed in time to prevent access of unauthorized personnel at this occasion.

In order to conveniently replenish goods into the distribution site, in some embodiments of the distribution site, a goods replenishing device is also included. The corresponding distribution method may further include: receiving the goods replenished from the external through the goods replenishing device; sorting the goods received by the goods replenishing device to a corresponding position of the storage space 9 by the goods sorting device 8.

Referring to Figs. 1 and 5, the staff may walk up the stairs 14 to open the goods replenishing door 15. At this time, at least one row of storage grids 51 of the rotary container 5 are exposed from the elongated goods replenishing door 15. The staff may place the goods into each empty storage grid 51 sequentially, and then the rotary container 5 is operated so that it is rotated to another angle. Alternatively, the rotary container 5 may be driven to rotate by a built-in driving mechanism of the goods replenishing device. In this way, at least one remaining row of empty storage grids 51 are exposed by rotation so that the staff may continue to place the goods into the storage grids 51.

The portion of the rotary container 5 that has turned to the inside may be picked up by the end picker of the stacking robot and the picking goods are placed into a corresponding goods grid in the storage space. The above-described process is recycled so that it is possible to realize rapid replenishment and storage of the goods, thereby greatly improving the operation efficiency.

When the client heads for the distribution site to self-pick up goods, dispatch goods, or purchase products, the goods or products may be transferred by the goods sorting device 8 according to a relevant instruction inputted by the client in the operation interface (for example, a picking instruction, a dispatching instruction, or a purchase instruction). The goods self-picking port, the goods placing port and the product exporting port here may share the same port or independently set. Each operation panel may be set independently, and may also incorporate the purposes for a client self-picking mechanism, a client dispatching mechanism, and an automatic vending device.

A plurality of embodiments in the present description are described in a progressive manner with different focuses respectively. For the same or similar parts between the respective embodiments, cross-reference may be made. For the embodiments of the method, since the method as a whole and the steps involved therein are in a relationship corresponding to the content in the embodiments of the device, such embodiments are described in a relatively simple manner. For the relevant aspects, reference may be made to some of the descriptions of the embodiments of the device.

Hereto, various embodiments have been described in detail. Some details well known in the art are not described to avoid obscuring the concept of the present disclosure. According to the above description, those skilled in the art would fully know how to implement the technical solutions disclosed herein.

Although some specific embodiments of the present disclosure have been described in detail by way of examples, those skilled in the art should understand that the above examples are only for the purpose of illustration. The invention is defined by the appended claims.

## Claims

1. A distribution site, comprising:
a building (1) having a storage space (9) configured to store goods and a distribution interface area configured to park an unmanned ground distribution vehicle (2) that is capable of performing goods distribution;
a goods sorting device (8) arranged in the building (1) and configured to load the goods in the storage space (9) onto the unmanned ground distribution vehicle (2); and
a vehicle adjusting mechanism (6) arranged in the distribution interface area and configured to adjust a position of the unmanned ground distribution vehicle (2) entering the distribution interface area, so that the goods sorting device (8) performs loading;
**characterized by** further comprising:
a visual device arranged in the building (1) and configured to recognize a position of the unmanned ground distribution vehicle (2) entering the distribution interface area, so that the vehicle adjusting mechanism (6) adjusts a position of the unmanned ground distribution vehicle (2) according to a recognition result of the visual device; and
an automatic vending device (42) having an operation interface and a product exporting port, and arranged outside the building (1), wherein the goods sorting device (8) is further configured to sort corresponding goods in the storage space (9) as products to the product exporting port according to a purchase instruction inputted by the client in the operation interface.

2. The distribution site according to claim 1, wherein the vehicle adjusting mechanism further comprises:
a rotary platform configured to rotate about an axis perpendicular to a horizontal plane, so as to adjust an angle of the unmanned ground distribution vehicle (2) above the rotary platform relative to the goods sorting device (8) by rotation.

3. The distribution site according to claim 1, wherein the goods sorting device (8) comprises:
a track arranged in the building (1) and located between the storage space (9) and the distribution interface area; and
a stacking robot running movably along the track, and configured to load the goods in the storage space (9) onto the unmanned ground distribution vehicle (2).

4. The distribution site according to claim 3, wherein the stacking robot comprises:
a bracket (83) running movably along the track;
a rotary seat (84) which is arranged on the bracket (83), rotatable in a horizontal direction relative to the bracket, and movable linearly in a vertical direction; and
an end picker (85) arranged on the rotary seat (84) and configured to pick up or release the goods.

5. The distribution site according to claim 4, wherein the rail comprises:
a first rail (81) arranged on a top ceiling inside the building (1); and
a second rail (82) arranged on a floor inside the building (1), and parallel to and directly opposite to the first rail (81).

6. The distribution site according to claim 5, wherein the bracket (83) comprises:
a first sliding block (83a) forming a sliding pair with the first rail (81);
a second sliding block (83b) forming a sliding pair with the second rail (82); and
a support rod (83c) arranged upright between the first sliding block (83a) and the second sliding block (83b), and having both ends respectively connected with the first sliding block (83a) and the second sliding block (83b);
optionally, a wall of the building (1) is enclosed in a rectangle or a rounded rectangle, and the distribution interface area and the goods replenishing device are respectively arranged at both ends of the building (1) along a length direction of the building (1), the storage space (9) is arranged at at least one end of the building (1) in a width direction of the building, and the goods sorting device (8) runs among the distribution interface area, the goods replenishing device and the storage space (9).

7. The distribution site according to claim 1, further comprising:
a goods replenishing device at least partially arranged in the building (1) for receiving goods replenished from the outside;
optionally, the goods replenishing device comprises:
a goods replenishing door (15) openably and closably arranged on an external wall of the building (1); and
a rotary container (5) having a plurality of storage grids (51) configured to store replenished goods, and rotatably arranged in the building (1),
wherein the rotary container (5) is located between the goods replenishing door (15) and the storage space (9), such that by rotating the rotary container (5), the storage grids (51) that has been replenished with the goods replenished from one side where the goods replenishing door (15) is located are transferred to one side where the storage space is located, and empty storage grids (51) of the rotary container (5) are transferred to one side where the goods replenishing door (15) is located.

8. The distribution site according to claim 7, wherein a rotation axis of the rotary container (5) is perpendicular to a floor inside the building (1), and the goods replenishing door (15) is configured to expose at least one vertical row of storage grids (51) of the rotary container (5).

9. The distribution site according to claim 7, wherein respective storage grids (51) in the rotary container (5) are divided into a plurality of storage areas classified according to different types of goods.

10. The distribution site according to claim 3, further comprising a goods replenishing device at least partially arranged in the building (1) and configured to receive goods replenished from the external,
wherein the track is also located between the storage space (9) and the goods replenishing device, and the stacking robot is further configured to sort the goods received by the goods replenishing device to a corresponding position in the storage space (9).

11. The distribution site according to claim 1, wherein the storage space (9) comprises a plurality of goods grids for storing goods, which are distributed on at least one side of an interior of the building (1); or an information display area (3) is provided on an external wall of the building (1); or an access door (16) for entry and exit of staff is provided on an external wall of the building (1); or the distribution interface area is located in the building (1) that is provided with a passage/door (17) communicating the external with the distribution interface area.

12. The distribution site according to claim 1, further comprising:
a client self-picking mechanism (41) having an operation interface and a goods self-picking port, and arranged outside the building (1), wherein the goods sorting device (8) is further configured to sort corresponding goods in the storage space (9) to the goods self-claiming port according to a picking instruction inputted by the client in the operation interface; or
a client dispatching mechanism having an operation interface and a goods placing port, and arranged outside the building (1), wherein the goods sorting device (8) is further configured to sort the goods received by the goods placing port to corresponding positions in the storage space (9) according to a dispatching instruction inputted by the client in the operation interface.

13. A distribution method based on the distribution site according to any one of claims 1 to 12, comprising:
loading the goods in the storage space (9) corresponding to a distribution task onto the unmanned ground distribution vehicle (2) through the goods sorting device (8) when the unmanned ground distribution vehicle (2) enters the distribution interface area, so that the unmanned ground distribution vehicle (2) distributes the goods to a target position according to the distribution task.

14. The distribution method according to claim 13, wherein the distribution site further comprises a goods replenishing device, and the distribution method further comprises:
receiving the goods replenished from the external through the goods replenishing device; and
sorting the goods received by the goods replenishing device to a corresponding position of the storage space (9) by the goods sorting device (8).

## Patentansprüche

1. Verteilungsstätte, umfassend:
ein Gebäude (1), das einen Lagerraum (9), der dazu konfiguriert ist, Waren zu lagern, und einen Verteilungsschnittstellenbereich aufweist, der dazu konfiguriert ist, ein unbemanntes Bodenverteilerfahrzeug (2) zu parken, das zum Durchführen einer Warenverteilung fähig ist;
eine Warensortiervorrichtung (8), der in dem Gebäude (1) eingerichtet und dazu konfiguriert ist, die Waren in dem Lagerraum (9) auf das unbemannte Bodenverteilerfahrzeug (2) zu laden; und
einen Fahrzeugjustiermechanismus (6), der in dem Verteilungsschnittstellenbereich eingerichtet und dazu konfiguriert ist, eine Position des unbemannten Bodenverteilerfahrzeug (2) zu justieren, das in den Verteilungsschnittstellenbereich einfährt, so dass die Warensortiervorrichtung (8) ein Laden durchführt;
**dadurch gekennzeichnet, dass** sie ferner umfasst:
eine visuelle Vorrichtung, die in dem Gebäude (1) eingerichtet und dazu konfiguriert ist, eine Position des unbemannten Bodenverteilerfahrzeug (2) zu erkennen, das in den Verteilungsgrenzflächenbereich einfährt, so dass der Fahrzeugjustiermechanismus (6) eine Position des unbemannten Bodenverteilerfahrzeugs (2) gemäß einem Erkennungsergebnis der visuellen Vorrichtung justiert; und
eine automatische Verkaufsvorrichtung (42), die eine Bedienschnittstelle und eine Produktausfuhröffnung aufweist und außerhalb des Gebäudes (1) eingerichtet ist, wobei die Warensortiervorrichtung (8) ferner dazu konfiguriert ist, entsprechende Waren in dem Lagerraum (9) als Produkte zu der Produktausfuhröffnung gemäß einer Kaufanweisung zu sortieren, die von dem Kunden in die Bedienschnittstelle eingegeben wird.

2. Verteilungsstätte nach Anspruch 1, wobei der Fahrzeugjustiermechanismus ferner umfasst:
eine Drehplattform, die dazu konfiguriert ist, sich um eine Achse senkrecht zu einer horizontalen Ebene zu drehen, um einen Winkel des unbemannten Bodenverteilerfahrzeugs (2) über der Drehplattform in Bezug auf die Warensortiervorrichtung (8) durch Drehung zu justieren.

3. Verteilungsstätte nach Anspruch 1, wobei die Warensortiervorrichtung (8) umfasst:
eine Spur, die in dem Gebäude (1) eingerichtet ist und sich zwischen dem Lagerraum (9) und dem Verteilungsschnittstellenbereich befindet; und
einen Stapelroboter, der beweglich entlang der Spur fährt und dazu konfiguriert ist, die Waren in dem Lagerraum (9) auf das unbemannte Bodenverteilerfahrzeug (2) zu laden.

4. Verteilungsstätte nach Anspruch 3, wobei der Stapelroboter umfasst:
einen Halter (83), der beweglich entlang der Spur fährt;
eine Drehauflage (84), die auf dem Halter (83) eingerichtet ist, in einer horizontalen Richtung in Bezug auf den Halter drehbar und linear in einer vertikalen Richtung beweglich; und
einen Endeffektor (85), der auf der Drehauflage (84) eingerichtet und dazu konfiguriert ist, die Waren aufzulesen oder freizugeben.

5. Verteilungsstätte nach Anspruch 4, wobei die Schiene umfasst:
eine erste Schiene (81), die auf einer obersten Decke im Inneren des Gebäudes (1) eingerichtet ist; und
eine zweite Schiene (82), die auf einem Boden im Inneren des Gebäudes (1) und parallel zu und direkt entgegengesetzt zu der ersten Schiene (81) eingerichtet ist.

6. Verteilungsstätte nach Anspruch 5, wobei der Halter (83) umfasst:
einen ersten Gleitschuh (83a), der ein Gleitpaar mit der ersten Schiene (81) bildet;
einen zweiten Gleitschuh (83b), der ein Gleitpaar mit der zweiten Schiene (82) bildet; und
eine Trägerstange (83c), die aufrecht zwischen dem ersten Gleitschuh (83a) und dem zweiten Gleitschuh (83b) eingerichtet ist und beide Enden jeweils mit dem ersten Gleitschuh (83a) und dem zweiten Gleitschuh (83b) verbunden aufweisen;
wobei optional eine Wand des Gebäudes (1) in einem Rechteck oder einem abgerundeten Rechteck eingeschlossen ist und der Verteilungsschnittstellenbereich und die Warennachfüllvorrichtung jeweils an beiden Enden des Gebäudes (1) entlang einer Längenrichtung des Gebäudes (1) eingerichtet sind, der Lagerraum (9) an mindestens einem Ende des Gebäudes (1) in einer Breitenrichtung des Gebäudes eingerichtet ist und die Warensortiervorrichtung (8) zwischen dem Verteilungsschnittstellenbereich, der Warennachfüllvorrichtung und dem Lagerraum (9) fährt.

7. Verteilungsstätte nach Anspruch 1, ferner umfassend:
eine Warennachfüllvorrichtung, die zumindest zum Teil in dem Gebäude (1) eingerichtet ist, zum Aufnehmen von Waren, die von außen nachgefüllt werden;
wobei optional die Warennachfüllvorrichtung umfasst:
eine Warennachfülltür (15), die öffenbar und schließbar auf einer Außenwand des Gebäudes (1) eingerichtet ist; und
einen Drehcontainer (5), der eine Vielzahl von Lagergittern (51) aufweist, die dazu konfiguriert sind, nachgefüllte Waren zu lagern, und drehbar in dem Gebäude (1) eingerichtet ist.
wobei sich der Drehcontainer (5) zwischen der Warennachfülltür (15) und dem Lagerraum (9) befindet, so dass die Lagergitter (51), die mit den Waren nachgefüllt wurden, die von einer Seite nachgefüllt wurden, auf der sich die Warennachfülltür (15) befindet, durch Drehen des Drehcontainers (5) zu einer Seite übertragen werden, auf der sich der Lagerraum befindet, und leere Lagergitter (51) des Drehcontainers (5) auf eine Seite übertragen werden, auf der sich die Warennachfülltür (15) befindet.

8. Verteilungsstätte nach Anspruch 7, wobei eine Drehachse des Drehcontainers (5) senkrecht zu einem Boden im Inneren des Gebäudes (1) ist und die Warennachfülltür (15) dazu konfiguriert ist, mindestens eine vertikale Reihe von Lagergittern (51) des Drehcontainers (5) freizulegen.

9. Verteilungsstätte nach Anspruch 7, wobei jeweilige Lagergitter (51) in dem Drehcontainer (5) in eine Vielzahl von Lagerbereichen aufgeteilt werden, die gemäß unterschiedlichen Typen von Waren klassifiziert werden.

10. Verteilungsstätte nach Anspruch 3, ferner umfassend eine Warennachfüllvorrichtung, die zumindest zum Teil in dem Gebäude (1) eingerichtet und dazu konfiguriert ist, Waren aufzunehmen, die von der Außenseite nachgefüllt werden,
wobei sich die Spur außerdem zwischen dem Lagerraum (9) und der Warennachfüllvorrichtung befindet und der Stapelroboter ferner dazu konfiguriert ist, die Waren, die von der Warennachfüllvorrichtung aufgenommen werden, zu einer entsprechenden Position in dem Lagerraum (9) zu sortieren.

11. Verteilungsstätte nach Anspruch 1, wobei der Lagerraum (9) eine Vielzahl von Warengittern zum Lagern von Waren umfasst, die auf mindestens einer Seite eines Innenraums des Gebäudes (1) verteilt werden, oder ein Informationsanzeigebereich (3) auf einer Außenwand des Gebäudes (1) vorgesehen ist; oder eine Zugangstür (16) zum Betreten und Verlassen für Personal auf einer Außenwand des Gebäudes (1) vorgesehen ist; oder sich der Verteilungsschnittstellenbereich in dem Gebäude (1) befindet, das mit einem Durchgang/einer Tür (17) versehen ist, der/die die Außenseite mit dem Verteilungsschnittstellenbereich verbindet.

12. Verteilungsstätte nach Anspruch 1, ferner umfassend:
einen Kundenselbstauswahlmechanismus (41), der eine Bedienschnittstelle und eine Warenselbstauswahlöffnung aufweist und außerhalb des Gebäudes (1) eingerichtet ist, wobei die Warensortiervorrichtung (8) ferner dazu konfiguriert ist, entsprechende Waren in dem Lagerraum (9) zu der Warenselbstabholöffnung gemäß einer Auswahlanweisung zu sortieren, die von dem Kunden in die Bedienschnittstelle eingegeben wird; oder
einen Kundenliefermechanismus, der eine Bedienschnittstelle und eine Warenplatzieröffnung aufweist und außerhalb des Gebäudes (1) eingerichtet ist, wobei die Warensortiervorrichtung (8) ferner dazu konfiguriert ist, die Waren, die von der Warenplatzieröffnung aufgenommen werden, zu entsprechenden Positionen in dem Lagerraum (9) gemäß einer Lieferanweisung zu sortieren, die von dem Kunden in die Bedienschnittstelle eingegeben wird.

13. Verteilungsverfahren auf der Basis der Verteilungsstätte nach einem der Ansprüche 1 bis 12, umfassend:
Laden der Waren in dem Lagerraum (9) entsprechend einer Verteilungsaufgabe auf das unbemannte Bodenverteilerfahrzeug (2) durch die Warensortiervorrichtung (8), wenn das unbemannte Bodenverteilerfahrzeug (2) in den Verteilungsschnittstellenbereich einfährt, so dass das unbemannte Bodenverteilerfahrzeug (2) die Waren zu einer Zielposition gemäß der Verteilungsaufgabe verteilt.

14. Verteilungsverfahren nach Anspruch 13, wobei die Verteilungsstätte ferner eine Warennachfüllvorrichtung umfasst und das Verteilungsverfahren ferner umfasst:
Aufnehmen der Waren, die von der Außenseite nachgefüllt werden, durch die Warennachfüllvorrichtung; und
Sortieren der Waren, die von der Warennachfüllvorrichtung aufgenommen werden, zu einer entsprechenden Position des Lagerraums (9) durch die Warensortiervorrichtung (8).

## Revendications

1. Un lieu de livraison, comprenant :
un bâtiment (1) ayant un espace de stockage (9) configuré pour le stockage de marchandises et une zone interface de livraison configurée pour le stationnement d'un véhicule de livraison terrestre sans pilote (2) qui est apte à effectuer la livraison de marchandises ;
un dispositif de tri de marchandises (8) agencé dans le bâtiment (1) et configuré pour charger les marchandises dans l'espace de stockage (9) sur le véhicule de livraison terrestre sans pilote (2) ; et
un mécanisme de réglage de véhicule (6) agencé dans la zone interface de livraison et configuré pour régler une position du véhicule de livraison terrestre sans pilote (2) entrant dans la zone interface de livraison, de façon à ce que le dispositif de tri de marchandises (8) effectue le chargement ;
**caractérisé en ce qu'**il comprend en outre :
un dispositif visuel agencé dans le bâtiment (1) et configuré pour reconnaître une position du véhicule de livraison terrestre sans pilote (2) entrant dans la zone interface de livraison, de façon à ce que le mécanisme de réglage de véhicule (6) règle une position du véhicule de livraison terrestre sans pilote (2) en fonction d'un résultat de reconnaissance du dispositif visuel ; et
un dispositif de livraison automatique (42) ayant une interface de fonctionnement et un orifice d'exportation de produit, et agencé à l'extérieur du bâtiment (1),
dans lequel le dispositif de tri de marchandises (8) est configuré en outre pour trier des marchandises correspondantes dans l'espace de stockage (9) qui sont les produits allant vers l'orifice d'expédition de produit en fonction d'une consigne d'achat entrée par le client dans l'interface de fonctionnement.

2. Le lieu de livraison selon la revendication 1, dans lequel le mécanisme de réglage de véhicule comprend en outre :
une plateforme rotative configurée pour tourner autour d'un axe perpendiculaire à un plan horizontal, de façon à régler un angle du véhicule de livraison terrestre sans pilote (2) au-dessus de la plateforme rotative par rapport au dispositif de tri de marchandises (8) par rotation.

3. Le lieu de livraison selon la revendication 1, dans lequel le dispositif de tri de marchandises (8) comprend :
un rail agencé dans le bâtiment (1) et situé entre l'espace de stockage (9) et la zone interface de livraison ; et
un robot d'empilage circulant le long du rail, et configuré pour charger les marchandises dans l'espace de stockage (9) sur le véhicule de livraison terrestre sans pilote (2).

4. Le lieu de livraison selon la revendication 3, dans lequel le robot d'empilage comprend :
un support (83) circulant le long du rail ;
un siège rotatif (84) qui est agencé sur le support (83), pouvant tourner dans une direction horizontale par rapport au support, et pouvant se déplacer linéairement dans une direction verticale ; et
un appareil de prélèvement d'extrémité (85) agencé sur le siège rotatif (84) et configuré pour prélever ou envoyer les marchandises.

5. Le lieu de livraison selon la revendication 4, dans lequel la glissière comprend :
une première glissière (81) agencée au plafond supérieur à l'intérieur du bâtiment (1) ; et
une deuxième glissière (82) agencée sur le sol à l'intérieur du bâtiment (1), et parallèle et directement opposée à la première glissière (81).

6. Le lieu de livraison selon la revendication 5, dans lequel le support (83) comprend :
un premier bloc coulissant (83a) formant une paire coulissante avec la première glissière (81) ;
un deuxième bloc coulissant (83b) formant une paire coulissante avec la deuxième glissière (82) ; et
une tige de support (83c) agencée verticalement entre le premier bloc coulissant (83a) et le deuxième bloc coulissant (83b), et ayant les deux extrémités raccordées respectivement avec le premier bloc coulissant (83a) et le deuxième bloc coulissant (83b) ;
en option, une paroi du bâtiment (1) est enfermée dans un rectangle ou un rectangle arrondi, et la zone interface de livraison et le dispositif de réapprovisionnement des marchandises sont agencés respectivement aux deux extrémités du bâtiment (1) le long d'une direction de longueur du bâtiment (1), l'espace de stockage (9) est agencé à au moins une extrémité du bâtiment (1) dans une direction de largeur du bâtiment, et le dispositif de tri de marchandises (8) circule dans la zone interface de livraison, le dispositif de réapprovisionnement des marchandises et l'espace de stockage (9).

7. Le lieu de livraison selon la revendication 1, comprenant en outre :
un dispositif de réapprovisionnement des marchandises agencé au moins partiellement dans le bâtiment (1) pour recevoir les marchandises de réapprovisionnement depuis l'extérieur ;
en option, le dispositif de réapprovisionnement des marchandises comprend :
une porte de réapprovisionnement des marchandises (15) pouvant être ouverte et fermée, agencée sur une paroi externe du bâtiment (1) ; et
un contenant rotatif (5) ayant une pluralité de grilles de stockage (51) configuré pour stocker des marchandises de réapprovisionnemen, et agencé pour pouvoir tourner dans le bâtiment (1),
dans lequel le contenant rotatif (5) est situé entre la porte de réapprovisionnement des marchandises (15) et l'espace de stockage (9), de telle sorte qu'en faisant tourner le contenant rotatif (5), les grilles de stockage (51) qui ont été réapprovisionnées avec les marchandises réapprovisionnées par un côté où la porte de réapprovisionnement des marchandises (15) est située sont transférées vers un côté où l'espace de stockage est situé, et les grilles de stockage vides (51) du contenant rotatif (5) sont transférées vers un côté où la porte de réapprovisionnement des marchandises (15) est située.

8. Le lieu de livraison selon la revendication 7, dans lequel un axe de rotation du contenant rotatif (5) est perpendiculaire au sol à l'intérieur du bâtiment (1), et la porte de réapprovisionnement des marchandises (15) est configurée pour exposer au moins une rangée verticale de grilles de stockage (51) du contenant rotatif (5).

9. Le lieu de livraison selon la revendication 7, dans lequel les grilles de stockage respectives (51) dans le contenant rotatif (5) sont divisées en une pluralité de zones de stockage classées en fonction de différents types de marchandises.

10. Le lieu de livraison selon la revendication 3, comprenant en outre un dispositif de réapprovisionnement des marchandises agencé au moins partiellement dans le bâtiment (1) et configuré pour recevoir les marchandises de réapprovisionnement de l'extérieur,
dans lequel le rail est aussi situé entre l'espace de stockage (9) et le dispositif de réapprovisionnement des marchandises, et le robot d'empilage est configuré en outre pour trier les marchandises reçues par le dispositif de réapprovisionnement des marchandises vers une position correspondante dans l'espace de stockage (9).

11. Le lieu de livraison selon la revendication 1, dans lequel l'espace de stockage (9) comprend une pluralité de grilles de marchandises pour stocker les marchandises, qui sont livrées sur au moins un côté d'une partie intérieure du bâtiment (1) ; ou une zone d'affichage d'informations (3) est fournie sur une paroi extérieure du bâtiment (1) ; ou une porte d'accès (16) prévue pour l'entrée et la sortie du personnel est fournie sur une paroi extérieure du bâtiment (1) ; ou la zone interface de livraison est située dans le bâtiment (1) qui est muni d'un passage / porte (17) faisant communiquer l'extérieur avec la zone interface de livraison.

12. Le lieu de livraison selon la revendication 1, comprenant en outre :
un mécanisme d'auto-prélèvement de client (41) ayant une interface de fonctionnement et un orifice d'auto-prélèvement de marchandises, et agencé à l'extérieur du bâtiment (1), dans lequel le dispositif de tri de marchandises (8) est configuré en outre pour trier des marchandises correspondantes dans l'espace de stockage (9) vers un orifice auto-déclaré des marchandises en fonction d'une consigne de prélèvement entrée par le client dans l'interface de fonctionnement ; ou
un mécanisme d'expédition de client ayant une interface de fonctionnement et un orifice de placement des marchandises, et agencé à l'extérieur du bâtiment (1), dans lequel le dispositif de tri de marchandises (8) est configuré en outre pour trier les marchandises reçues par l'orifice de placement des marchandises vers des positions correspondantes dans l'espace de stockage (9) en fonction d'une consigne d'expédition entrée par le client dans l'interface de fonctionnement.

13. Un procédé de livraison basé sur le lieu de livraison selon l'une quelconque des revendications 1 à 12, comprenant :
le chargement des marchandises dans l'espace de stockage (9) correspondant à une tâche de livraison sur le véhicule de livraison terrestre sans pilote (1) par le biais du dispositif de tri de marchandises (8) lorsque le véhicule de livraison terrestre sans pilote (2) entre dans la zone interface de livraison, de façon à ce que le véhicule de livraison terrestre sans pilote (2) livre les marchandises à une position cible en fonction de la tâche de livraison.

14. Le procédé de livraison selon la revendication 13, dans lequel le lieu de livraison comprend en outre un dispositif de réapprovisionnement des marchandises, et le procédé de livraison comprend en outre :
la réception des marchandises de réapprovisionnement provenant de l'extérieur par le biais du dispositif de réapprovisionnement des marchandises ; et
le tri des marchandises reçues par le dispositif de réapprovisionnement des marchandises vers une position correspondante de l'espace de stockage (9) par le dispositif de tri de marchandises (8).
